# EUROPÄISCHE PATENTSCHRIFT

(11) **EP 0 385 179 B1**
(45) Veröffentlichungstag und Bekanntmachung des Hinweises auf die Patenterteilung: **03.08.1994**
(21) Anmeldenummer: 90102834.0
(22) Anmeldetag: 13.02.1990
(51) Int. Cl.: G11B 5/708, G11B 5/842

(54) **Verfahren zur Herstellung eines magnetischen Aufzeichnungsträgers**
Method of making a magnetic-recording medium
Méthode de production d un milieu d'enregistrement magnétique

(30) Priorität: 25.02.1989 DE 3905910
(43) Veröffentlichungstag der Anmeldung: 05.09.1990
(73) Patentinhaber: BASF Magnetics GmbH, 68165 Mannheim (DE)
(72) Erfinder: Gerum, Johannes, Dr., D-8034 Unterpfaffenhofen (DE); Schulz, Horst, Dr., D-8160 Miesbach (DE); Sauter, Jürgen, Dipl.-Chem., D-8000 München 71 (DE)
(74) Vertreter: Münch, Volker, Dr.

(56) Entgegenhaltungen:
- EP-A- 0 177 939
- DE-A- 3 731 066

## Beschreibung

Die Erfindung betrifft ein Verfahren zur Herstellung eines magnetischen Aufzeichnungsträgers, bestehend aus einem flexiblen Schichtträger und einer darauf aufgebrachten magnetischen Dispersion, in welcher magnetische Pigmente, polymere Bindemittel, Lösemittel und Dispergatoren enthalten sind.

Ein derartiger magnetischer Aufzeichnungsträger ist beispielsweise aus der EP-A 0 177 939 bekannt.

Es ist bekannt, daß die Aufzeichnungsqualität eines magnetischen Aufzeichnungsträgers maßgeblich durch die Homogenität des Magnetschichtinneren und die erzielbare Glätte der Magnetschichtoberfläche bestimmt wird. Inhomogenitäten können verursacht werden duch Vorhandensein von unvollständig aufgeteilten Pigmentagglomeraten, durch Reagglomeration von ursprünglich monodispers aufgeteilten Pigmentpartikeln oder durch unterschiedlich starke Oberflächenbelegung der Pigmentteilchen, was außerdem zu einer verminderten Ausrichtbarkeit führt.

Durch intensive Mahlung der magnetischen Dispersion läßt sich der Anteil an primären Pigmentagglomeraten zwar weitgehend abbauen, durch unterschiedlich starke Verhakung beziehungsweise Versinterung der Pigmentagglomerate ist der leichter aufteilbare Pigmentanteil jedoch bereits stark übermahlen, ehe der versinterte Pigmentnadelanteil ausreichend zerkleinert ist.

Der auf diese Weise auftretende Anteil von zerbrochenen oder beschädigten Pigmentnadeln zeigt nun ein völlig anderes Adsorptionsverhalten der eingesetzten Rezepturkomponenten auf die Pigmentoberfläche als die schonend aufgeteilte unverletzte Pigmenteinzelnadel.

Unterschiedliche Belegung der Pigmentoberflächen führt jedoch zu einer zeit- und temperaturabhängigen Umbelegung der Rezepturinhaltsstoffe auf der Pigmentoberfläche, was zu Reagglomeration der magnetischen Dispersion und damit zu räumlichen und zeitlichen Inhomogenitäten der Magnetschicht führt.

Da bereits einzelne gebrochene Pigmentnadeln ursächlich für die daraus resultierende sekundäre Agglomeration der magnetischen Dispersion sein können, ist es bisher noch nicht möglich, den damit verbundenen Abfall des Aufzeichnungssignales zu vermeiden.

Bei der Aufzeichnung von Videosignalen macht sich dieser Effekt deutlich bemerkbar, insbesondere bei hochdichter Aufzeichnung mit Grenzwellenlängen von 0,5 bis 1,0 µm. Eine monodisperse magnetische Dispersion ist somit eine unabdingbare Voraussetzung für die zunehmend geforderte Speicherkapazität und die erforderliche Zuverlässigkeit der Laufeigenschaften eines modernen magnetischen Mediums.

So wird in JP 62-041 274 der erforderlichen unterschiedlichen Dispergierintensität über die Gesamtmahldauer zwar dadurch Rechnung getragen, daß zu bestimmten Zeitpunkten der Dispergierung unterschiedliche Mengen an Lösemittel zugesetzt werden. Dies hat jedoch den Nachteil, daß während der Mahldauer die Rezepturkomponenten in unterschiedlicher Konzentration vorliegen, wodurch gerade eine uneinheitliche Adsorption in Kauf genommen werden muß.

In JP-N 56/148 727 wird nach Anpassung der Dispersionsviskosität durch reines Lösemittel zwar noch ein restlicher Anteil von Dispergierhilfsmittel vor der Dispergierung zugesetzt, was jedoch nicht ausreicht, die während der Dispergierung entstehenden neuen Pigmentoberflächen gleichmäßig abzudecken.

Die schrittweise Zugabe von Lösemittel während der Dispergierung, wie in der JP 61/090330 beschrieben, ermöglicht zwar die erforderlichen Pastenviskositäten einer Kneterdispergierung, berücksichtigt aber nicht die ausreichende Belegung mit Rezepturbestandteilen der während der Mahlung neu entstehenden Pigmentoberfläche.

Der Erfindung liegt daher die Aufgabe zugrunde, ein Verfahren zur Herstellung eines magnetischen Aufzeichnungsträgers der eingangs genannten gattungsgemäßen Art zu finden, um sicherzustellen, daß die während der Dispergierung des magnetischen Lackes permanent neu entstehenden Pigmentoberflächen unmittelbar nach deren Entstehung durch dispersionsstabilisierende Rezepturkomponenten belegt werden.

Es wurde überraschenderweise gefunden, daß die Richtbarkeit und damit die Schichthomogenität, die erzielbare Oberflächenglätte und daraus resultierend die Speichertechnik eines magnetischen Mediums dadurch deutlich verbessert werden konnte, in dem der magnetischen Dispersion zeitlich gleichmäßig über die Dauer der Feindispergierung verteilt eine dispersionsstabilisierende Komponente zugesetzt wird. Der Begriff Feindispergierung wird nachfolgend näher erläutert.

Dabei zeigt sich, daß die gewünschte monodisperse Aufteilung des magnetischen Pigments durch zeitlich gleichmäßig über die Dauer der Feindispergierung verteilte Zugabe sowohl von niedermolekularen Verbindungen mit einem Molekulargewicht < 10 000, als auch von höhermolekularen Verbindungen mit einem Molekulargewicht zwischen 10 000 und 100 000 erzielt werden kann.

Aus der Vielzahl bekannter niedermolekularer dispersionsstabilisierender Komponenten erwiesen sich besonders hochgereinigte Lecithine (Lethicon der Fa. Nattermann, Reinlecithin der Fa. Stern, Lipotin der Fa. L. Meyer) als geeignet neben der Mischung eines Polyethoxiphosphatesters (Gafac der GAF GmbH) oder von Ethylendiamindistearaten.

Von den untersuchten höhermolekularen Verbindungen mit eingebauten funktionellen Gruppen erwiesen sich unter anderem das carboxylgruppenhaltige Copolymerisat auf Basis von Vinylchlorid und Vinylalkohol (Ucarmag 528 der Fa. Union Carbide) , das sulfonatgruppenhaltige Polyurethan (UR-8300 der Fa. Toyobo Co., Ltd.) und ein Polyiminpolyester (Hypermer MT 1 der Firma ICI) als geeignete Vertreter.

Neben den verbesserten mechanischen und speichertechnischen Eigenschaften, die durch das erfindungsgemäße Zusetzen von dispersionsstabilisierenden Stoffen erzielt werden, wird zusätzlich ein wirtschaftlicher Vorteil dadurch erreicht, daß mit deutlich erhöhten Feststoffgehalten der magnetischen Dispersion gearbeitet werden kann. Dadurch reduziert sich die für die Dispersionsherstellung erforderliche Lösemittelmenge. Weiter brauchen nur geringere Lackvolumina angesetzt, dispergiert, filtriert und gefördert werden und schließlich muß zudem weniger Energie für die Trocknung des Aufzeichnungsmediums aufgewandt werden.

Die magnetischen Dispersionen werden in an sich bekannter Weise hergestellt. Nach dem erfindungsgemäßen Einbringen der dispersionsstabilisierenden Komponente, zeitlich gleichmäßig über die Dauer der Feindisperdierung verteilt, wird die magnetische Dispersion in einer Gießeinrichtung auf eine nichtmagnetische Unterlage aufgebracht und zum gewünschten Format als Band oder als Platte verarbeitet.

Als Lösemittel können alle zur Lösung der ausgewählten Bindemittel tauglichen Flüssigkeiten verwendet werden. Beispiele sind Tetrahydrofuran, Dioxan, Dimethylformamid, Cyclohexanon, Methyl-Ethyl-Keton, Toluol, Methyl-Isobutylketon und andere, gegebenenfalls auch in Kombination miteinander.

Die Auswahl der eingesetzten Dispergierhilfsmittel beziehungsweise dispersionsstabilisierenden Substanzen erfolgt aus der Vielzahl bekannter oberflächenaktiver Verbindungen, wie zum Beispiel Lecithin, Cephalin, Fettsäureamine oder -diamine, Fettsäureamide oder -diamide, Fettsäuren beziehungsweise deren Ammoniumsalze, ethoxylierte Fettsäurederivate, aliphatische oder aromatische gegebenenfalls ethoxylierte Phosphorsäureester, Sulfobernsteinsäureester, Sorbitan-Ester, aliphatische oder aromatische Sulfonsäuren oder Sulfonate, Fettalkoholsulfate und andere mehr.

Als magnetisches Pigment werden bevorzugt nadelförmige Teilchen aus Eisen oder einer Eisenlegierung wie Eisencobalt oder Eisennickel mit einer durchschnittlichen Teilchenlänge von 0,1 - 1,0 µm und einem Verhältnis der Längs- zu Querachse von etwa 1 : 10 eingesetzt.

Gleichermaßen kann als magnetisches Pigment feinteiliges γ-Fe₂O₃, Fe₃O₄, cobaltdotiertes Fe₃O₄ oder ferromagnetisches Chromdioxid verwendet werden.

Als Bindemittel für die Dispersion des magnetischen Pigmentes können die für die Herstellung von Magnetschichten üblichen Bindemittel eingesetzt werden wie Copolymere aus Vinylchlorid, Vinylacetat und Vinylalkohol, Copolymere aus Vinylidenchlorid und Acrylnitril, Polyvinylacetale wie Polyvinylformale, Polyester/Polyurethane, Polyurethan- oder Polyetherelastomere, Phenoxy- oder Epoxyharze, ebenso wie deren Mischungen.

Das magnetische Pulver wird in einer geeigneten Menge Lösemittel, einer geeigneten Menge eines Dispergierhilfsmittels und einer Bindemittelmischung intensiv vermischt und einer Vordispergierung unterzogen, was zum Beispiel an einem Dissolver, einem Kneter, einer Kolloidmühle, einer Kugelmühle oder anderen hochscherenden Aggregaten durchgeführt werden kann.

Die zweite Stufe der Dispergierung, nämlich die Feindispergierstufe, erfolgt nun beispielsweise in einer Perlmühle, deren Mahlintensität durch Variation der Mahlkörpergröße und -füllung, die Drehzahl und Lackdurchsatz gesteuert werden kann.

Um eine möglichst enge Pigmentverteilungsbreite zu erhalten wird vorzugsweise die magnetische Dispersion in mehreren Passagen von einem ersten Vorratsgefäß über eine oder mehrere beispielhaft genannte Perlmühlen in ein zweites Vorratsgefäß gefahren.

Erfindungsgemäß wird nun nach jeder Passage ein gleicher Anteil der dispersionsstabilisierenden Komponente der magnetischen Dispersion zugemischt, ehe die nächste Mahlpassage durchgeführt wird. Dieses Vorgehen wird bis zum Erreichen des gewünschten Mahlgrades wiederholt. Dazu wird nach jeder Passage der Glanz und die Ausrichtbarkeit eines Prüfbandes bestimmt.

Nach Abschluß dieser Feindispergierstufe werden gegebenenfalls die restlichen Bindemittelanteile oder Additive der magnetischen Dispersion zugemischt.

Die anschließende Beschichtung des unmagnetischen Schichtträgers mit der Magnetdispersion erfolgt entsprechend dem Stand der Technik zum Beispiel mittels Reverse-Roll-Coater, Rasterdruck-, Extrudergießer.

Als Schichtträger können Folien aus Polyester, wie Polyethylenterephthalat, Polyolefine, wie Polypropylen, Cellulosederivate wie Triacetat, Polycarbonate oder starre Schichtträger aus nichtmagnetischen Metallen wie Aluminium, oder keramische Materialien eingesetzt werden.

Die weitere Bearbeitung der beschichteten Materialien, wie die Oberflächenglättung durch Kalandern, Schneiden und Konfektionieren, erfolgt in bekannter Weise.

Um Vorteile des erfindungsgemäßen Verfahrens zu belegen, werden folgende Eigenschaften eines auf 8 mm-Breite getrennten Magnetbandes beschrieben.

### 1. Ausrichtbarkeit

Als Maß für die erzielbare Dispersionsqualität wird die magnetische Ausrichtung M_{R}/M_{S} herangezogen. Die Messung erfolgt an einem Vibrationsmagnetometer bei einer Sättigungsmagnetisierung von 6 kOe.

### 2. Glanz

Als weiteres Maß für die Dispersionsqualität und die erzielbare Oberflächenglätte des Speichermediums wird der Glanz unmittelbar nach Schichtauftrag bestimmt. Die Messung erfolgt mit einem Glanzmeßgerät der Firma Lange bei einem Reflexionswinkel von 60°.

### 3. Speichertechnik

Es wird auf einem 8 mm-Video-Recorder (EV-A 300 der Firma Sony) der Signal/Rauschabstand eines 5 MHz-Signals bestimmt. Als Referenzband wird ein interner Bezug zugrundegelegt.

### 4. Feststoffgehalt

Der angegebene Feststoffgehalt errechnet sich als der Quotient der Massen aller eingesetzter Feststoffe zu der Gesamtmasse der magnetischen Dispersion multipliziert mit 100.
Nachfolgend wird die Erfindung anhand von Beispielen näher erläutert. Einer speziellen Ausführungsform des Verfahrens zur Herstellung eines magnetischen Aufzeichnungsmediums liegt folgende Formulierung zugrunde:

### Beispiel 1

| | |
|---|---|
| Magnetisches Pigment (Fe/Ni-Legierung; I^{Hc} : 1500 Oe, BET: 48 m²/g) | 100 Gew. Teile |
| Nichtmagnetisches Pigment (Cr₂O₃; mittlere Teilchengröße <0,3 µm) | 5 Gew. Teile |
| Dispergierhilfsmittel (Myristinsäure) | 2 Gew. Teile |
| Dispersionsstabilisierende Komponente (Polyiminpolyester) | 5 Gew. Teile |
| Bindemittel 1 (Vinylchlorid-Vinylacetat-Vinylalkohol-Copolymeres) | 10 Gew. Teile |
| Bindemittel 2 (Polyesterpolyurethan) | 12 Gew. Teile |
| Schmiermittel (Stearinsäure) | 1 Gew. Teil |
| Vernetzer (trifunktionelles Isocyanat) | 4 Gew. Teile |

| Lösemittel | |
|---|---|
| Tetrahydrofuran Toluol | 220 Gew. Teile |
| | 135 Gew. Teile |

Das magnetische Pigment, das nichtmagnetische Pigment, das Dispergierhilfsmittel und die Bindemittel werden in das Lösemittel eingerührt und anschließend mit einer Kolloidmühle vorzerkleinert.
Die sich anschließende Fein-Dispergierung erfolgt mittels einer Kugelmühle, wobei nach jeder der insgesamt 10 erforderlichen Mahlpassagen 0,5 Gew. Teile der dispersionsstabilisierenden Komponente während 10 Minuten eingerührt werden.
Nach Erreichen des gewünschten Mahlgrades wird das Schmiermittel und der Vernetzer eingerührt. Anschließend wird die erhaltene Dispersion in bekannter Weise auf einen Polyesterschichtträger aufgebracht, magnetisch ausgerichtet, getrocknet, kalandert und auf 8 mm Breite getrennt.

### Vergleichsbeispiel 1

Die dispersionsstabilisierende Komponente wird vollständig mit den anderen Inhaltsstoffen vorgelegt, ansonsten wird wie im Beispiel 1 verfahren. Es wird zusätzlich soviel Lösemittelgemisch zugesetzt, bis die Verarbeitungsviskosität von Beispiel 1 eingestellt wird.

### Vergleichsbeispiel 2

Die dispersionsstabilisierende Komponente wird erst nach Erreichen des gewünschten Mahlgrades eingerührt, ansonsten wird wie in Beispiel 1 verfahren. Es wird zusätzlich soviel Lösemittelgemisch zugesetzt, bis die Verarbeitungsviskosität von Beispiel 1 eingestellt wird.

### Vergleichsbeispiel 3

Es wurde wie in Beispiel 1 verfahren, jedoch wurde keine dispersionsstabilisierende Komponente zugesetzt.

### Beispiel 2

Als dispersionsstabilisierende Komponente wird Ethylendistearyldiamid zugesetzt, ansonsten wird wie in Beispiel 1 verfahren.

### Beispiel 3

Als polymere dispersionsstabilisierende Komponente wird sulfonatgruppenhaltiges Polyurethan eingesetzt, ansonsten wird wie in Beispiel 1 verfahrne.

### Beispiel 4

Eine CrO₂-haltige magnetische Dispersion mit folgender Rezeptur wurde hergestellt:

| | |
|---|---|
| Magnetisches Pigment (CrO₂; I^{Hc}: 650 Oe, BET: 28 m²/g | 100 Gew. Teile |
| Dispergierhilfsmittel (Lecithin) | 1 Gew. Teil |
| Dispersionsstabilisierende Komponente (Lecithin) | 2 Gew. Teile |
| Bindemittel 1 (Vinylchlorid-Vinylacetat-Vinylalkohol-Copolymeres) | 6 Gew. Teile |
| Bindemittel 2 (Polyesterpolyurethan) | 14 Gew. Teile |
| Schmiermittel (Stearinsäure) | 0,5 Gew. Teile |
| Vernetzer (trifunktionelles Isocyanat) | 3 Gew. Teile |

| Lösemittel | |
|---|---|
| Tetrahydrofuran | 150 Gew. Teile |
| Cyclohexanon | 50 Gew. Teile |

### Vergleichsbeispiel 4

Die dispersionsstabilisierende Komponente wird vollständig mit den übrigen Inhaltsstoffen vorgelegt, ansonsten wird wie in Beispiel 4 verfahren. Es wird zusätzlich soviel Lösemittelgemisch zugesetzt, bis die Verarbeitungsviskosität von Beispiel 4 eingestellt ist.
Die Ergebnisse der Versuchsbeispiele sind in Tabelle 1 dargestellt

| Beispiel | M_{R}/M_{S} - | Glanz - | S/N bei 5 MHz dB | Feststoff Gew.% |
|---|---|---|---|---|
| 1 | 0,84 | 70 | + 1,7 | 28,1 |
| Vergleichsbeispiel 1 | 0,82 | 48 | + 0,5 | 27,2 |
| Vergleichsbeispiel 2 | 0,81 | 43 | 0 | 26,9 |
| Vergleichsbeispiel 3 | 0,78 | 40 | - 1,3 | 26,0 |
| 2 | 0,83 | 65 | + 1,3 | 27,8 |
| 3 | 0,82 | 62 | - 0,9 | 27,6 |
| 4 | 0,85 | 70 | 1,4* | 38,7 |
| Vergleichsbeispiel 4 | 0,82 | 58 | 0,2 * | 36,2 |

| | | | | |
|---|---|---|---|---|
| * diese Messung erfolgte an einem 1/2''-Videoband auf einem VHS-Recorder (Panasonic). | | | | |

Aus den Ergebnissen ist ersichtlich, daß die zeitlich gleichmäßig verteilte Zugabe von dispersionsstabilisierenden Komponenten während der Dauer der Feindispergierung die Ausrichtbarkeit, der Glanz und damit verbunden die Speichertechnik des damit hergestellten magnetischen Aufzeichnungsträgers deutlich verbessert.

## Patentansprüche

1. Verfahren zur Herstellung eines magnetischen Aufzeichnungsträgers, bestehend aus einem flexiblen Schichtträger und einer darauf aufgebrachten magnetischen Dispersion, in welcher magnetische Pigmente, polymere Bindemittel, Lösemittel und Dispergatoren enthalten sind, dadurch gekennzeichnet, daß
- in einem ersten Schritt magnetische Pigmente, polymere Bindemittel, Lösemittel und Dispergierhilfsmittel mittels eines Rühraggregats intensiv vermischt und vordispergiert werden
- daß in einem zweiten nachfolgenden Schritt die so vorbehandelte Dispersion in einem oder mehreren Rühraggregaten einmal oder in mehreren Passagen feindispergiert wird, wobei gleichzeitig entweder kontinuierlich oder in mehreren Teilen eine dispersionsstabilisierende Verbindung zugegeben wird.

2. Verfahren nach Anspruch 1, dadurch gekennzeichnet, daß als dispersionsstabilisierende Komponente eine niedermolekulare Verbindung mit einem Molekulargewicht < 10 000 zeitlich gleichmäßig über die Feindispergierdauer verteilt der magnetischen Dispersion zugesetzt wird.

3. Verfahren nach Anspruch 1 oder 2, dadurch gekennzeichnet, daß bevorzugt als dispersionsstabilisierende Komponente hochgereinigtes Lecithin oder ein Mischester eines Polyethoxyphosphatesters oder Ethylendiamindistearat eingerührt wird.

4. Verfahren nach Anspruch 1, dadurch gekennzeichnet, daß als dispersionsstabilisierende Komponente eine höhermolekulare Verbindung mit einem Molekulargewicht > 10 000 und < 100 000 zeitlich gleichmäßig über die Feindispergierdauer verteilt der magnetischen Dispersion zugesetzt wird.

5. Verfahren nach Anspruch 1 oder 4, dadurch gekennzeichnet, daß als dispersionsstabilisierende Komponente ein Polyurethanharz mit eingebauten Sulfonatgruppen zeitlich gleichmäßig über die Feindispergierdauer verteilt der magnetischen Dispersion zugesetzt wird.

6. Verfahren nach Anspruch 1 oder 4, dadurch gekennzeichnet, daß als dispersionsstabilisierende Komponente ein Vinylchlorid-Vinylalkoholcopolymeres mit einem eingebauten Säurerest, der ausgewählt ist aus der Gruppe der Carbonsäuren, Phosphorsäuren oder Sulfonsäuren oder dessen Salze, zeitlich gleichmäßig über die Feindispergierdauer verteilt der magnetischen Dispersion zugesetzt wird.

## Claims

1. A process for the production of a magnetic recording medium, consisting of a flexible substrate and a magnetic dispersion which is applied thereon and contains magnetic pigments, polymeric binders, solvents and dispersants, wherein
in a first step, magnetic pigments, polymeric binders, solvents and dispersants are thoroughly mixed by means of a stirring unit and are predispersed
and
in a second subsequent step, the dispersion pretreated in this manner is finely dispersed in one or more stirring units, once or in a plurality of passes, a dispersion-stabilizing compound being added simultaneously, either continuously or in a plurality of parts.

2. A process as claimed in claim 1, wherein a low molecular weight compound having a molecular weight of < 10,000 is added, as the dispersion-stabilizing component, to the magnetic dispersion, uniformly over the duration of fine dispersing.

3. A process as claimed in claim 1 or 2, wherein highly purified lecithin or a mixed ester of a polyethoxyphosphoric acid or ethylenediaminedistearate is preferably stirred in as the dispersion-stabilizing component.

4. A process as claimed in claim 1, wherein a relatively high molecular weight compound having a molecular weight of from > 10,000 to < 100,000 is added, as the dispersion-stabilizing component, to the magnetic dispersion, uniformly over the duration of fine dispersing.

5. A process as claimed in claim 1 or 4, wherein a polyurethane resin having integral sulfonate groups is added, as the dispersion-stabilizing component, to the magnetic dispersion, uniformly over the duration of fine dispersing.

6. A process as claimed in claim 1 or 4, wherein a vinyl chloride/vinyl alcohol copolymer having an integral acid radical which is selected from the group consisting of the carboxylic acids, phosphoric acids or sulfonic acids or salts thereof is added, as the dispersion-stabilizing component, to the magnetic dispersion, uniformly over the duration of fine dispersing.

## Revendications

1. Procédé de fabrication d'un support d'enregistrement magnétique, composé d'un support en couche flexible et d'une dispersion magnétique répandue sur lui, dans laquelle sont contenus des pigments magnétiques, des liants polymères, des solvants et des dispersants, caractérisé en ce que
- dans une première étape, les pigments magnétiques, les liants polymères, les solvants et les auxiliaires de dispersion sont mélangés intensivement à l'aide d'un groupe agitateur et sont prédispersés,
- en ce que, dans une deuxième étape subséquente, la dispersion ainsi prétraitée est dispersée finement, lors d'un ou de plusieurs passages, dans un ou plusieurs groupes agitateurs, un composé, stabilisant la dispersion, étant ajouté simultanément, soit de façon continue, soit en plusieurs parties.

2. Procédé selon la revendication 1, caractérisé en ce que, comme composant stabilisant la dispersion, on ajoute à la dispersion magnétique un composé à faible poids moléculaire, d'un poids moléculaire < 10000, réparti régulièrement en fontion de l'écoulement du temps, au cours de la durée de dispersion fine.

3. Procédé selon la revendication 1 ou 2, caractérisé en ce que, de préférence de la lécithine à degré de pureté élevé, utilisée comme composant stabilisant la dispersion, ou un ester mélangé d'un ester en polyethoxyphosphate ou un distéarat en diamine d'éthylène est introduit avec agitation.

4. Procédé selon la revendication 1, caractérisé en ce que, comme composant stabilisant la dispersion, on ajoute à la dispersion magnétique un composé à poids moléculaire élevé, d'un poids moléculaire > 10000 et < 100000, réparti régulièrement en fonction du temps, au cours de la durée de dispersion fine.

5. Procédé selon la revendication 1 ou 3, caractérisé en ce que, comme composant stabilisant la dispersion, on ajoute à la dispersion magnétique une résine polyuréthanne à groupes de sulfonate incorporés, répartie régulièrement en fonction du temps, au cours de la durée de dispersion fine.

6. Procédé selon la revendication 1 ou 4, caractérisé en ce que, comme composant stabilisant la dispersion, on ajoute à la dispersion magnétique un copolymère alcool vinylique-chlorure de vinyle avec un radical acide incorporé, sélectionné dans le groupe des acides carboxyliques, des acides phosphoriques ou acides sulfoniques, réparti régulièrement en fonction du temps, au cours de la durée de dispersion fine.
